# EUROPEAN PATENT APPLICATION

(11) **EP 1 914 631 A1**
(43) Date of publication of application: **23.04.2008**
(21) Application number: 06122653.6
(22) Date of filing: 20.10.2006
(51) Int. Cl.: G06F 9/46

(54) **Method and apparatus for interacting with a web service**

(71) Applicant: NTT DoCoMo, Inc., Tokyo (JP)
(72) Inventor: Broll, Gregor, 85579 Neubiberg (DE); Hamard, John, 80796 München (DE); Paolucci, Massimo, 81241 München (DE); Rukzio, Enrico, 80805 München (DE); Siorpaes, Sven, 81477 München (DE); Wagner, Matthias, 80999 München (DE)
(74) Representative: Betten & Resch

(57) **Abstract**

A method for executing an interaction between a mobile device of a user and a Web service corresponding to a tag attached to a physical object, said method comprising:
reading the tag information contained in a tag attached to a physical object by a tag reading module of said mobile device, whereas said tag information contains a link to a storage location where a description of said Web service is stored;
accessing said storage location by said mobile device to download said description of said Web service;
generating an interaction manager which comprises a service client based on said downloaded Web service description to enable said user's device to interact with the Web service corresponding to said tag.

## Description

### FIELD OF THE INVENTION

The invention relates to a method and an apparatus for interacting with a Web service.

### BACKGROUND OF THE INVENTION

A number of technologies, such as Near Field Communication (NFC), Radio Frequency Identification (RFID) and 2-dimensional visual tags, provide a way to associate digital information with arbitrary objects. As a consequence they enable a vision, loosely labelled as Internet of Things (IoT), in which users access information, and in turn services, through any object in their environment.

A number of solutions have already been developed to exploit these technologies; they range from 1D or 2D bar code readers, to products such services as iMode-FeliCa described in somewhat more detail below. Still, no solution so far addressed the problem of associating dynamically an object to a service available on the Internet. In other words, to this day it is impossible to approach with an appropriate reader an arbitrary object enhanced with electronic or visual tags and to automatically interact with a service which is associated to the object. All solutions to date require that the reader be customized ahead of time to work with the specific service.

In the following some solutions known in the art will be described.

The association of services and tags is not a new idea. Indeed a number of solutions have been proposed in the academic literature and in the industry. In existing applications and academic projects the relation between the services and the tags is always hard-coded; therefore it is impossible with existing systems use any arbitrary object to connect to a service if there is no such pre-defined hard-coded relation between the tag and the service.

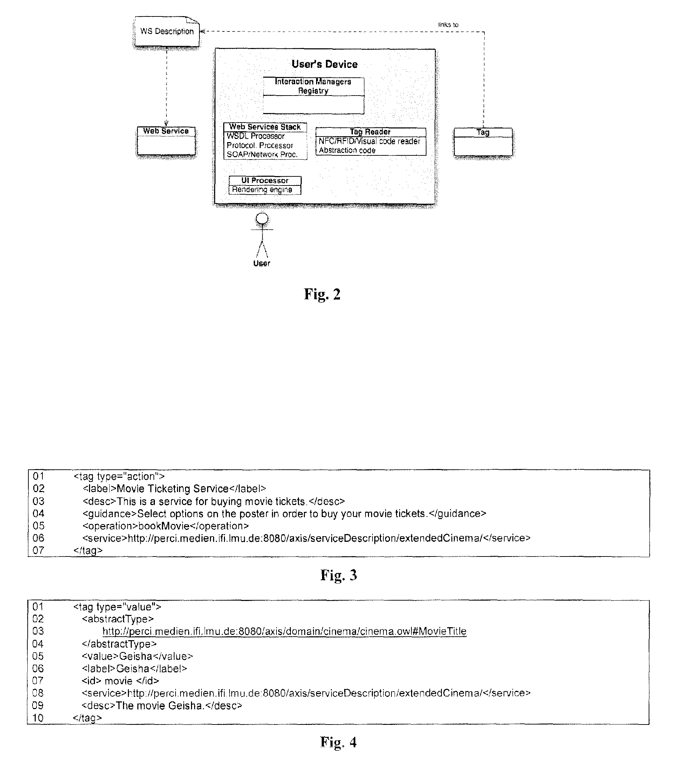

Furthermore, the interaction with the object in the prior art is always restricted to a single reading action. Specifically, the interaction is restricted to reading the tag and sending the value to a service. On the opposite the interaction with objects such as the movie poster shown in Fig. 2 which shows multiple movies requires that the values associated to multiple tags are sent to the service.

In the following some prior art approaches are described in somewhat more detail.

There are multiple ways to connect services and tags. In the first way the tag consists of an active reader that is connected to the service, and the user holds a card with some information stored on it. To trigger the service, the user swipes a card in front of the reader which reads known location on the card and then communicates the data directly to a service. Eventually, information may be sent back from the service and written on the card as a response. This solution is very effective and used in a number of applications from public transport to building access, but it is also very rigid since, in the worse case, the user needs a different card for each service she uses. Even when the card is shared across applications, as in the case of FeliCa enabled phones in Japan, the application providers need to agree on which portion of the card do they read and write. So it is impossible for two application providers to work on the same card without previous agreement. Moreover, the user cannot use the card in conjunction with a new service for which the card has not been configured since these services will not be able to use the data on the card, and in the worse case it may override such data making the card unusable.

A second way is illustrated by the use of visual codes to associate IDs with objects. In this case, the user holds a reader which is hardwired to read a specific type of tags and to trigger a service on the user's device. For example in Japan 2D visual codes are often used on advertisements. By using an appropriate application on the mobile phone, a user may take a picture of the visual code and automatically load on the browser the Web page of the advertised company. In this case the relation is still hard-coded since the only service that is possible with the visual marker is the downloading of Web pages.

In the third way, the interaction with the tag and the interaction with the service are left separate; still the information gathered through the tag can be used to provide information to the service. An example of this solution is provided in J. Riekki, T. Salminen, I. Alakärppä; Requesting Pervasive Services by Touching RFID Tags; IEEE Pervasive computing, 2006. The system using RFID is used to identify objects or people are present in a room, while Web services are used to offer services. Despite the fact that Web services and RFID are used in the same system they perform two very different tasks and they never work together. RFID is used only for identification, which in turn means that the RFID tags that are on the people and the objects in the environment are very passive and just report the MAC id of the object that they identify. On the other side, services are invoked through the infrastructure described by the Service Oriented Architecture (SOA). In practice Web services register with a UDDI registry and they are discovered through the registry. Services and then interact directly, at no time during the SOA cycles the NFC or RFID tags are used for any other than provide identification information on the objects and people in the environment.

In the fourth way, a number of service clients may be already loaded on the phone, and the loT tag is used to select the appropriate client that will control the interaction with the service, and to transfer information to the service during the interaction. Examples of this type of applications are the iMode-FeliCa which is e.g. described in Yoshinaga H., Hattari Y., Sato T., Yoschida M. and Washio S. i-Mode FeliCa; NTT DoCoMo Technical Journal, Vol 6, No 3, Dec 2003 and deployed by NTT DoCoMo in Japan. iMode-FeliCa allows DoCoMo's customers to access different types of services such as current balance or their accounts, and payment services, but to access these services the user needs to have first downloaded an *i-appli* stub that acts as service client. i-applis are java applications for i-mode written in the DoJa dialect of Java which run on the i-mode platform on the phone. Upon being downloaded, the i-appli is verified trough the FeliCa Platform Servers. And finally, after the verification, the i-appli becomes active and able to access the FeliCa card. Every interaction with the service will require first the identification of the appropriate i-apply, and then the use of the i-apply acting as a service client.

There is further a project developed by the University of Oulu which describes how to invoke services using RFID, see e.g. J. Riekki, T. Salminen, I. Alakärppä; Requesting Pervasive Services by Touching RFID Tags; IEEE Pervasive computing, 2006.. The basic idea is that each RFID indicates a type of service, such as a printing service. Upon reading the tag, the service middleware engine loaded in the phone activates a service stub corresponding to the type of service selected, and then the stub looks for the best matching service available and activates that service. This system requires that the stubs are already loaded and available to the middleware: if no printing stub has been loaded, the swiping on the printing icon will not activate any service, even if a printing service is available.

Solutions such as iMode-FeliCa are effective to enable services that are persistent through time such as accessing a bank statement or a transportation system. In these cases, the client can be instantiated once, verified if needed, and then used to access the service when the user needs it. But they do not support casual interactions with tagged objects which are unknown.

The overview above shows that there are many ways to associate a tag with a service, yet they all result in hard-coded solutions which will not work when the user attempts to interact with an unknown service. E.g. one may assume that a user encounters a movie poster which advertises e.g. four movies and which has RFID tags installed which contain information about the movies, movie theatres, etc. and which would enable the user to interact with a Web service to reserve or buy a ticket for one or more of the movies in a specific theatre. In the prior art, if the user has not installed the corresponding application on his mobile device for reading the tags and for calling the Web service and interacting with it the user will not be able to use the tagged movie poster to call and use the Web service.

In addition to the problem of connection with services, another dimension is defined by the interaction between users and the objects. Normally, the user needs to do only one action such as swiping the phone or the card in front of a tag, or take a picture of a visual marker. The action invokes the service and sends to the service the appropriate data. As pointed out above, this user interaction mechanism is not enough to address the problem described above in relation with a movie poster, where multiple actions are required to invoke a service. Specifically, the user needs to specify (1) the movie she wants to see, (2) the show she wants to attend, (3) the movie theatre where she wants to go to, and (4) the number of tickets requested, before she can purchase a ticket. In the prior art multiple actions by a user are not known. There have been proposals which provide a way to use more complex gestures, such as lasso select, than just point and click that is normally used (see e.g. Reilly, D., Welsman-Dinelle, M., Bate, C., and Inkpen, K. (2005). Just Point and Click? Using Handhelds to Interact with Paper Maps. In Proceedings of Mobile HCl 2005*).* Using lasso select a user may select multiple pieces of information from a map at the same time, yet the user makes only one action instead of multiple actions. A different approach to actions in conjunction with tagged objects has been explored in Enrico Rukzio, Karin Leichtenstern, Vic Callaghan, Albrecht Schmidt, Paul Holleis, Jeannette Chin; An Experimental Comparison of Physical Mobile Interaction Techniques: Touching, Pointing and Scanning; Eighth International Conference on Ubiquitous Computing (Ubicomp 2006), California, USA. 17-21 September 2006, where different interaction techniques such as "pointing" and "scanning" are investigated. Yet, here the user has to do one single action to gather information from the object.

There are some publications which describe the problem of enhancing objects with NFC tags and of using such objects to purchase goods such as movie tickets and public transport tickets, such as Gregor Broll, Sven Siorpaes, Enrico Rukzio, Massimo Paolucci, John Hamard, Matthias Wagner, Albrecht Schmidt.; Supporting Service Interaction in the Real World; In Permid Workshop 2006 in conjunction with Pervasive 2006, Dublin, Ireland, May 7 2006, or Enrico Rukzio, Massimo Paolucci, Matthias Wagner, Hendrik H. Berndt, John Hamard, A. Schmidt.; Mobile Service Interaction with the Web of Things; 13th International Conference on Telecommunications (ICT 2006), Funchal, Madeira island, Portugal, May 9-12 2006, or Sven Siorpaes, Gregor Broll, Massimo Paolucci, Enrico Rukzio, John Hamard, Matthias Wagner, Albrecht Schmidt.; Mobile Interaction with the Internet of Things; In Late Breaking Result and Poster at 4th International Conference on Pervasive Computing (Pervasive 2006), May 7-10, 2006, Dublin, Ireland.

The publications present an infrastructure of a hypothetical system that supports such purchases; and second, a low fidelity paper-prototype is discussed. The architecture is divided in two components: an *Interaction Proxy,* which is responsible for tasks like Service Composition, Reasoning, User Interface Generation; and a *Universal Client* residing on the phone which is responsible of rendering the User Interface and for the reading of the tag exploiting the PML framework. PML is a general language for describing physical objects for use in monitoring and control of a physical environment - particularly through the Internet. Applications include inventory tracking, automatic transaction, supply chain management, machine control and object-to-object communication. Details about PML can be found on http://web.mit.edu/mecheng/oml/index.html.

Aside from providing the vision and describing the requirements of the system, the papers discuss a paper-prototype experiments in which potential users have been asked to react to a hypothetical system that may have some of the capabilities that are presented in this invention report. The paper-prototype experiment is performed using paper mockups of the tested system, essentially paper leaflets of the screenshots that a user would see if the system existed, and they are used to gauge the reaction of potential users to such a system.

Although in the papers there are claims that a complete prototype has been implemented, fundamental details are missing. Specifically,
1. There is no discussion of how the service description relates to the tags. Even the simplest question such as "what is the content of the tag?" or "How do the Interaction Proxy or the Universal Client find the process to interact with?" are not answered.
2. Since the service is not known a priori, the whole infrastructure has to be created on the fly, yet there is no discussion of how it is created, what capabilities are expected on the phone, or on the proxies.
3. There is no description of how the user interface relates to the service description: of course the interaction with the service and the interaction with the user need to be synchronized, yet no such mechanism is provided.
5. One important aspect of the work is that multiple user actions are required to interact with the object, yet it is not described how the infrastructure supports this process. Is the infrastructure re-instantiated every time a new tag is read? Or is it re-used? Are the values from the tags immediately passed to the service, or are they stored anywhere for future use? And where are the results of the interactions stored?
5. Multiple services may be used through the same object, yet no infrastructure for this case is provided.
6. No algorithm is presented; therefore no expert of the field or programmer would be able to duplicate such a system.

Ultimately the papers present a vision and an idea of a system that could support interactions with objects in the real world, but no technical details are provided on how such a system may actually work.

### SUMMARY OF THE INVENTION

According to one embodiment there is provided a method for executing an interaction between a mobile device of a user and a Web service corresponding to a tag attached to a physical object, said method comprising:
reading the tag information contained in a tag attached to a physical object by a tag reading module of said mobile device, whereas said tag information contains a description of a Web service or a link to a storage location where a description of said Web service is stored;
Accessing said storage location by said mobile device to download said description of said Web service;
generating an interaction manager which comprises a service client based on said downloaded Web service description to enable said user's device to interact with the Web service corresponding to said tag.

This enables a mobile device to interact with Web services corresponding to tags even if there is not yet a Web service client installed on the device.

According to one embodiment the method further comprises:
maintaining an interaction manager registry in which interaction managers are indexed with their corresponding links to the storage locations where the description of the Web service corresponding to an interaction manager is stored;
if a tag is read, checking in the interaction manager registry whether for the storage location of the Web service description as identified by the link in the tag information there exists already a corresponding interaction manager in the mobile device;
if the interaction manager exists already, using it for performing the interaction with the Web service;
if the interaction manager doesn't exist yet, accessing said storage location to download said Web service description and to instantiate said interaction manager.

This makes it possible to re-use an interaction manager or a service client once it has been created. If each tag has the storage location identifier, every time a tag is read such a checking can be performed.

According to one embodiment said description of said Web service stored on said tag has an associated identifier, and
in said interaction manager registry, interaction managers can be indexed, in place of the service URL, using said identifier identifying said Web service description to enable the determination whether a corresponding interaction manager exists already or not.

In this manner the interaction manager registry can decide whether to generate a new interaction manager or whether to use an already existing one.

According to one embodiment said Web service description further comprises a description of a user interface, said method further comprising:
generating a user interface based on said Web service description which specifies what information is provided to the user and what information is asked.

This enables the use of arbitrary user interfaces belonging to the Web services.

According to one embodiment said Web service description comprises:
a description of the protocol of the Web service which specifies in which order to execute the operations of the Web service.

This enables to generate the interaction manager such that the program logic of the service client is executed in accordance with the requirements of the Web service.

According to one embodiment a tag may contain a value to be used by said Web service as an input, said tag further comprising an ID of said value and/or a reference to the storage location of said Web service description or the indentifier of said Web service description,, and said Web service description comprises:
an association between the IDs of the tags containing a value to be used as an input by said Web service and the corresponding inputs expected by the Web service, and
whereas said method further comprises:
   generating a value store in said mobile device to store said IDs together with the corresponding values from said tags to enable said values to be forwarded to said Web service.

This enables the use of arbitrary tags containing arbitrary information.

According to one embodiment a tag may contain an action identifier identifying an action to be performed by said Web service, said identifier comprising:
a reference to the storage location of said Web service description or the indentifier of said Web service description, and
an identifier identifying said action within said Web service description, whereas reading said by said mobile device triggers the execution of said action identified by said action identifier.
The use of such "action tags" enables the triggering of an action to be performed by the Web service by the user reading the tag through the mobile device.

According to one embodiment said method comprises:
maintaining a value store in which the data read from said tags can be stored, whereas each tag comprises a reference to the storage location of said Web service description or the indentifier of said Web service description, said method further comprising:
   storing data contained on a tag in said value store together with the reference to the storage location of said Web service description or the indentifier of said Web service description.

This enables an order independent input of parameters and even of parameters and actions to be carried out.

According to one embodiment the user interface provides the user with the possibility to input the data which can also be read from a tagged object to thereby enable the user to input the data from the tagged object or through the user interface.

This enables the user to continue the interaction even if the connectivity has been lost. Moreover, if the user finds the input via the user interface more convenient he may choose this way instead of reading the input from the tags.

According to one embodiment there is provided an apparatus for executing an interaction between a mobile device of a user and a Web service corresponding to a tag attached to a physical object, said apparatus comprising:
a reading module for reading the tag information contained in a tag attached to a physical object by a tag reading module of said mobile device, whereas said tag information contains a description of a Web service or a link to a storage location where a description of said Web service is stored;
an access module for accessing said storage location by said mobile device to download said description of said Web service;
a generation module for generating an interaction manager which comprises a service client based on said downloaded Web service description to enable said user's device to interact with the Web service corresponding to said tag.

According to one embodiment the apparatus further comprises:
a module for maintaining an interaction manager registry in which interaction managers are indexed with their corresponding links to the storage locations where the description of the Web service corresponding to an interaction manager is stored;
a module for if a tag is read, checking in the interaction manager registry whether for the storage location of the Web service description as identified by the link in the tag information there exists already a corresponding interaction manager in the mobile device;
for -if the interaction manager exists already - using it for performing the interaction with the Web service;
and for - if the interaction manager doesn't exist yet - accessing said storage location to download said Web service description and to instantiate said interaction manager.

According to one embodiment said Web service description further comprises a description of a user interface, said apparatus further comprising:
a module for generating a user interface based on said Web service description which specifies what information is provided to the user and what information is asked.

According to one said Web service description comprises:
a description of the protocol of the Web service which specifies in which order to execute the operations of the Web service.

According to one embodiment a tag may contain a value to be used by said Web service as an input, said tag further comprising an ID of said value and/or a reference to the storage location of said Web service description or the indentifier of said Web service description, and wherein said Web service description comprises:
an association between the IDs of the tags containing a value to be used as an input by said Web service and the corresponding inputs expected by the Web service, and
whereas said method further comprises:
   generating a value store in said mobile device to store said IDs together with the corresponding values from said tags to enable said values to be forwarded to said Web service.

According to one embodiment a tag may contain an action identifier identifying an action to be performed by said Web service, said identifier comprising:
a description of a Web service or a reference to the storage location of said Web service description, and
an identifier identifying said action within said Web service description, whereas reading said by said mobile device triggers the execution of said action identified by said action identifier.

According to one embodiment said apparatus comprises:
a module for maintaining a value store in which the data read from said tags can be stored, whereas each tag comprises a reference to the storage location of said Web service description or the indentifier of said Web service description, said method further comprising:
   a module for storing data contained on a tag in said value store together with the reference to the storage location of said Web service description or the indentifier of said Web service description.

According to one embodiment the user interface provides the user with the possibility to input the data which can also be read from a tagged object to thereby enable the user to input the data from the tagged object or through the user interface.

According to one embodiment the information contained in a tag comprises:
a link to a storage location where a description of said Web service is stored.
   This enables the download of a Web service description and the generation of a Web service client even if it has not been pre-installed.

According to one embodiment there is provided a computer program comprising program code which when being executed on a computer causes said computer to carry out a method according to one of the embodiments of the invention

### BRIEF DESCRIPTION OF THE DRAWINGS

Fig. 1 schematically illustrates a poster having tags which may be used in connection with an embodiment of the invention.
Fig. 2 schematically illustrates an apparatus according to an embodiment of the invention.
Fig. 3 and Fig. 4 show illustrative examples of contents of tags to beused in connection with an embodiment of the invention.
Fig. 5 illustrates schematically how the components of an apparatus according to an embodiment of the invention interact.

### DETAILED DESCRIPTION

In the following there will be described embodiments of the invention which are capable to associate any object that has been enhanced with a (Web) service. The term Web service thereby is to be understood so as to at least encompass any program available on the Internet that can be described by a WSDL document, whereas WSDL is the Web Service Description Language. Details about WSDL can be taken from Chinnici R., Moreau J., Ryman A.; Web Services Description Language (WSDL) Version 2.0 Part 1: Core Language; W3C Candidate Recommendation 27 March 2006; http://www.w3.org/TR/2006/CR-wsdl20-20060327, and associated documents.

In accordance with the W3C definition a Web service is *"A service that is accessible by means of messages sent using standard Web protocols, notations and naming conventions, including XML Protocol (or until XML protocol is standardized, SOAP). Web service may also imply the use of ancillary mechanisms, such as WSDL and UDDI for defining Web services interfaces."*

One may also say that a Web service is a software system designed to support interoperable machine-to-machine interaction over a network. It has an interface described in a machine-processable format (specifically WSDL). Other systems interact with the Web service in a manner prescribed by its description using SOAP-messages, typically conveyed using HTTP with an XML serialization in conjunction with other Web-related standards.

Before continuing with a description of embodiments of the invention, at first some terms which are used hereafter are clarified.
*HTTP: Hypertext Transfer Protocol*
*IoT: Internet of Things*
*NFC: Near Field Communication*
*OWL-S: OWL Service Ontology*
*RFID: Radio Frequency Identification*
*SOAP: Simple Access Object Protocol*
*UI: User Interface*
*URI: Universal Resource Identifier*
*URL: Universal Resource Locator*
WSDL: Web Services Description Language
*XML: Extensible Markup Language*

In the following embodiments will be described which enable a user's device to automatically create a service client and, when needed, a user interface from the information provided by a tag.
Using the thus generated service client the user may then interact with the Web service.

As will become more apparent from the following, the type of tagging technology used is not of relevance, but only on the presence of some sort of a tag that provides the address of the service description, and additional information such as the operation to be performed on the service and the values to send to the service.

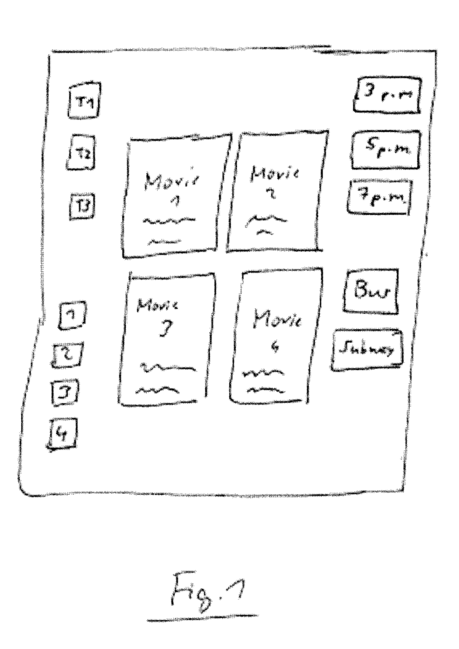

As a sample application that will be enabled by this invention consider the poster in Fig 1. The four pictures in the center of the poster indicate different movies; the small boxes on the side indicate movie theaters that play the movies (upper left), the show times (upper right), the number of tickets that can be acquired (lower left), and public transport options (lower right) to reach the movie theater. Each box is associated with an NFC tag glued to the back of the poster. In turn the poster is associated with a service that takes as input the movie the user wants to see, the movie theater, the time of the show the user wants to attend and as output it issues a movie ticket. A mobile user armed with an NFC-enabled mobile phone can read the tags on the poster and automatically invoke a service to purchase a movie ticket and purchase a public transport ticket to the theater.

It may now be assumed that the user has no service client installed on his device to interact with the corresponding Web service. In order to solve this problem, according to one embodiment there is created a service client through the interaction with the object and further the object is used to control the interaction with the service. The solution is based on Web service technology; therefore at first there is provided a declarative specification of the interaction protocol of a service in terms of the workflow of operations to be performed by the service, the messages to be exchanged to implement those operations, the format of these messages, the specification of the input and output ports and the transport protocol to be used to exchange the messages between the client and the server. As a result a client will be created on the fly to control the interaction with the service and discarded when the interaction is completed.

According to one embodiment, in order to support the interaction of a device with a service through a tagged object, as outlined, the following three components, shown in Fig. 2, are provided:
1. A service which is reachable through the Internet, or through a local network to which the user's device has access. The behavior of the service is described using Web services languages such as WSDL, OWL-S or WS-BPEL. The latter description should also be reachable by the user's device.
2. An object enriched with visual or electronic tags, where the tags refer to the service description, an operation to be performed on the service, and/or values to send to the service.
3. A device with which the user can read the tag and invoke the service.

The user's device may be a mobile phone, a smartphone, or any similar or comparable device, e.g. a PDA or subnotebook. Since some mobile phones may not have the required computational power to implement the full functionality described in the following, some of the processing may be executed on a remote server using remote procedure calls, e.g. to a server provided by the operator or even the home computer of the user.

The components inside the *user's device* are responsible for the three main steps of the algorithm that controls the user's device access the service through the tag. These components are schematically illustrated in Fig. 4. Specifically, the *Tag Reader* is of course required to read the tag which is the first step of the algorithm. The tag reader should include both the hardware required to read a tag, i.e. a camera as in the case of visual codes, or a NFC or RFID reader; as well as the software required to operate that hardware, and software required to expose an API to the rest of the system.
The second step of the algorithm is to use the information provided by the tag to instantiate *Interaction Managers* which are responsible to manage the information flow from the tag reader to the service and the User Interface. The *Interaction Managers Registry* is responsible to create these Interaction Managers and to store them to be used in future tag readings.

The third step of the algorithm is to use the Interaction managers to control the data flow between the tag, the service and the user. Two components are required to support such a process. The first component is responsible of the interaction with the web service. Such a component is realized at run time through a set of libraries that support the interaction with Web services. Such libraries, which are often labeled *Web Services Stack* provide APIs for network management, SOAP and HTTP processing, WSDL interpretation and the execution of the Web service protocol. Examples of the Web Services stack include libraries such as Apache Axis (see ws.apache.org/axis/), J2EE, Microsoft .Net as well as libraries such as the OWL-S API (see e.g. http://www.mindswap.org/2004/owl-s/api/). The second component is the *UI processor* that is responsible to transform the abstract user interface described in the service description in a concrete user interface which is displayed to the user.

Using these three steps a user may interact with the Web service.

The three steps of the algorithm are described in greater detail in the three sections below.

### Tag Reading

The first step of the algorithm is the reacting of the tag. Tags can be encoded using one of the many different tagging technologies currently available which are ranging from Near Field Communication (NFC) to Radio Frequency Identification (RFID) to visual codes using semacodes, a description of which may be found on http://www.semacodes.org, or any other tagging technology, and potentially on other standards such as Bluetooth, or WLAN. The type tagging technology is of no relevance for this invention, as long as the user's device through the reading of the tag acquires information. Rather, what is important is the content of the tag. According to one embodiment there are three types of tags:
1. Action Tags: tags that can be associated with operations performed by the service, such as reserving a ticket or purchasing goods. Action tags need to identify uniquely the operation to be performed by providing (a) the URL of the Web service description in which the operation is described, and (b) the name or the URI of the operation within the service description.
2. Value Tags: tags that are associated with a value. For example the tags associated with a movie to see or with the time of the show and so on. These tags according to one embodiment contain four pieces of information: (a) the value of the data, (b) the type of the data, (c) an ID which can be used to associate the data to both the information to send to the service and the information to display to the user, and (d) a URL where to find the service description.
3. Hybrid tags: tags that combine the previous two types by expressing both an action to be performed as well as a value.

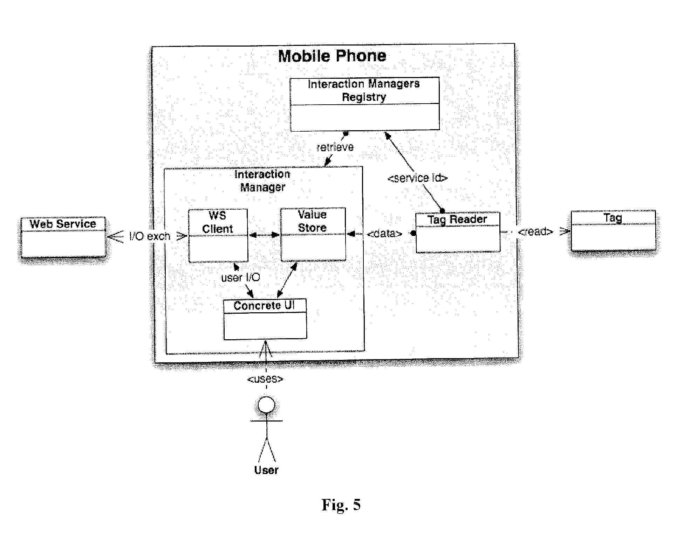

Examples of action and value tags are displayed in Fig. 4 and Fig.5. The example of the action tag in Fig. 4 identifies the operation bookMovie to be performed by the service whose description can be found at the URL http://perci.medien.ifi.lmu.de:8080/axis/serviceDescription/extendedCinema. For the value tag in Fig. 5 the value of the data is given by the Movie title Geisha, the type of the data is given by <abstractType>, the !D is given by <id> movie </id> and the service URI is given by the same URI used above: http://perci.medien.ifi.lmu.de:8080/axis/serviceDescription/extendedCinema. Additional tags such as <abstractType> are used to specify the semantic value of the tag to be available for additional inference; while the tags <label> and <desc> are used for documentation directed to the implementers.

Using such tags the user's device may perform the tag reading as a first step.

### Creation and/or Retrieval of Interaction Managers

The second step of the algorithm has the purpose of instantiating an Interaction Manager to interact with the service. As briefly described above, Interaction Managers control the service client and the user interface. In this case there are two possibilities: either the service is already known and the phone has already a client for it, or the service is not known and in this case the phone needs to instantiate a new Interaction Manager using the available information about the service and the user interface description. Such a process is controlled by the following steps:
1. The *Interaction Managers Registry* maintains a correspondence from the URL of the description of the service to the Interaction Managers required to interact with that service.
2. Given the URL read from the tag, the mobile phone retrieves from the Interaction Managers Registry the Interaction Manager corresponding to that service, or an empty value if such Interaction Manager does not exist yet.
3. If an Interaction Manager is found, it is returned and the algorithm moves to managing of the interaction with the service as described below under "managing the interaction with the service".
4. If no Interaction Manager is found, the mobile phone builds a new one. Such a process involves the following steps
   a. Load the service description from the service URL. Such service description according to one embodiment contains three components
      i. The WSDL description with the service operations, message specifications and ports
      ii. A description of the protocol of the Web service which specifies in which order to execute the operations. The protocol description can be expressed in Web service description languages such as abstract WS-BPEL or OWL-S.
      iii. An extension of the WSDL description or of the protocol description that describes the abstract user interface of the service. The user interface can be expressed in any abstract user interface language, for example XForms (see e.g. http://www.w3.org/MarkUp/Forms/), XUL(see e.g. www.mozilla.org/projects/xul/) or any other language provided that exists a rendering engine for it.
      iv. An association between the ids of the value tags and the inputs expected by the Web service. This association can be expressed either within the Web service descriptions using extensibility elements, or as a table defined outside the service descriptions.
   b. Once the service description is loaded, the instantiation of the Interaction Manager is performed consistently with the following steps.
      i. Given the WSDL description of the service and the service protocol, the mobile phone instantiates a service client. This step can be performed using the Web Services stack libraries. This step can be performed using the Web services stack libraries, which can be performed by the same type of libraries mentioned in connection with the execution of the interactions manager. The service client is then used to decide which operations to invoke on the service side (consistently with the service protocol), and to invoke those operations (consistently with the WSDL description).
      ii. Given the description of the user interface the mobile phone can generate a concrete User Interface which specifies what information about the operation is provided to the user and what information is asked. For this purpose, any rendering engines for the user interface language can be. Such rendering engines may range from a Web browser displaying HTML tags, to engines such as SULU (http://sulu.sourceforge.net/) to XForm engines (http://alphaworks.ibm.com/tech/xmlforms) depending on the language used to express the user interface.
      iii. The value store for the value tags is generated. Such store can be as simple as a hash table whose keys are the id of the value, and the values are the actual values of the tag.
      iv. The three components, namely the service client, the user interface, and the value store are packaged together to form the Interaction Manager.
5. The created Interaction Manager is stored in the Interaction Manager Registry to be used to process other tags that are read from the object. The indexing of the Interaction Manager should be based on the URL of the service description. This makes it possible to invoke it again if the user encounters another tag which is designed to interact with the Web service for which a service client has now been created on the user's device by the instantiated interaction manager.
6. The Interaction Manager is then used to control the interaction with the service as discussed previously.

It will be understood by the skilled person that the generation of the interaction manager (or the webservice client being a part of it) "on the fly" is a significant advantage of the previous approaches which required Web service clients to be hardwired and pre-installed in order for interaction with a corresponding tag to be possible. It will, however, be understood by the skilled person that for that purpose there must be installed on the mobile device a framework which enables the generation of the interaction manager "on the fly". This can be done by implementing on the mobile device e.g. the libraries mentioned before in connection with the execution of the interaction manager, and which also enable the generation if the user inrterface.
The other components necessary for implementing the functionality of the embodiments of the invention may be implemented by standard programming techniques, e.g. by using Java which is a standard programming language for creating mobile phone applications.

### Managing the Interaction with the Service

As a result of the steps above, the Interaction Manager is created and through it the device interacts with the service. The architecture of the Interaction Manager is displayed in Fig. 5, which also displays in some details the structure of the Interaction Manager and the relation between its different components.

Once the Interaction Manager is available, it assumes control of the interaction with the service and the user consistently with the service description that has been loaded on the phone. Generally speaking, the invocation of an operation results in two activities on the mobile phone side. The first of such activities is to send data to the service; the second activity is to receive data from the service. In the process, the phone displays information to the user, and read information that the user inputs. To send data to the service the mobile phone needs to:
1. Decide which operation to perform on the service side. An operation is enabled to execute if:
   a. It is the next operation in the order described by the protocol language;
      i. In case of non-deterministic choice the mobile phone may either ask the user to make the decision, if a UI action has been specified to address this problem, or make a selection autonomously.
   b. The operation has been selected by the user through an action tag;
   c. All values expected by the input parameters of the operation have been specified either by reading a value tag or through direct user input.
2. Display a User Interface. The User Interface is specified by the abstract user interface description that is associated with the operation in the service description. Displaying the abstract Ul includes:
   a. Select the display action to perform. This operation will result in either to display the data, or to display error and warning messages;
   b. Select the data to display to the user. This selection is based on the id of the values read from the tags;
   c. Display the data consistently with the Abstract User Interface specification;
   d. Possibly read inputs from the user if this is required by the user interface User inputs are also assigned an id and stored in the value-store
3. Select the data to send to the service. This selection is performed exploiting the association between the ids of the data in the value-store and the inputs required by the service.
4. Use service client to send the data. The service client using the WSDL description will select the appropriate format for the data to send and the port and network protocol to use.

The second activity, namely receiving the data from the service involves waiting for an answer from the service, and reading the data that it sent. Specifically, the interaction manager will
1. Wait for data coming from the service client;
2. Assign IDs to the data, and store it in the value-store;
3. Invoke the UI;
4. Proceed to the next step in the protocol description of the service; Once that the execution of the process is completed, the interaction manager needs to decide whether to execute another process looping back to step 1, or to suspend the interaction with the service, and move to step 5 where the Interaction Manager is stored in the Interaction Managers Registry.
5. Upon suspending the interaction with the service, the Interaction Manager is either archived in the Interaction Managers Registry, and the execution process loops back to step 1 waiting to process another tag or it is destroyed if the interaction with the process is completed.

In the following there will be described a more concrete example of how the system according to one embodiment operates referring to the poster in Fig. 1 and how it may be used to buy a movie ticket. The poster advertises four movies, and it contains tags corresponding to movie theaters that run those movies (on the upper left side tags T1, T2, T3), the number of tickets that the user may want to buy (on the lower left side 1, 2, 3, 4), the show times (on the upper right side 3 p.m., 5 p. m., 7 p.m.) and public transport options (on the lower right side Bus, Subway).

In this example, the poster is serviced by two services:
a. A movie service whose protocol has three operations which should be run in the order listed:
   1. Select_Theater_and_Movie which takes as input the theater and the movie, and returns as outputs whether the movie plays in the theater;
   2. Select_Time_and_People which takes as input the desired show time and the number of tickets, and returns a stub indicating whether the seats are available
   3. Payment which takes as input the stub of the previous process and a credit card number and returns a ticket.
b. The second service is a simple transport service that takes as input the credit card number and the type of ticket and returns in out a transport ticket

The user approaching the poster may first swipe the phone on one of the movie tags, and the tag will be read by the user's device. The tag is a hybrid tag containing both as value the movie title; say Geisha, the URL of the service, and the operation to be performed by the service: Select_Theater_and_Movie.
Upon reading the tag, the control is shifted to the Interaction Managers Registry which follows the algorithm described before under Creation and/or Retrieval of Interaction Managers. Since no Interaction Manager for the service is present yet, a new one is created on the basis of the service description (which is indicated by its corresponding URL in the tag) and it is indexed in the registry with the URL of its description.

When the Interaction manager is created, it assumes the control of the interaction with the service. The value pair (movie, Geisha), where movie is the id and Geisha is the value, is stored in the value-store. Since no operation can yet execute (the operation Select_Theater_and_Movie is still missing one input) the Interaction Manager suspends its execution waiting for the next input.

The second action of the user may be to read the tag setting the number of tickets to buy to 2. Since an interaction manager is already known for the service it is reused. The value (tickets, 2) is added to the value-store. Since no operation is enabled to run none is executed.

The third action of the user may be to read the tag selecting the movie theater (by swiping the mobile phone over its tag). Again the appropriate Interaction Manager is retrieved; the value pair (theater, Rex) is added to the value-store. This time the operation Select_Theater_and_Movie can be executed since it is the next in line in the protocol, all values are available, and the corresponding action or hybrid tag have been selected by the user. As a consequence the service client will invoke the operation on the service, which will give as a reply a Boolean stating that the movie is playing at the theater. Assuming that a user interface description is associated with the output of the operation, it will communicate to the user that the movie is running in the desired theater. Finally, the execution of the operation is completed, and the next operation is allowed to run.

Continuing the interaction the user may select other tags triggering a process similar to the one described above. Namely when the tag relates to known services the appropriate Interaction Manager is retrieved, when instead they refer to new services, for instance if for the first time the public transport tag is read, a new Interaction Manager is created. Finally, some operations, such as the payment operations require the user input, so they may trigger user interfaces that explicit ask the user for the information.

When the protocol of the services is concluded and the purchase of the tickets is completed, the corresponding Interaction Managers are discarded since there is no longer need for them. If the user decides to use the same poster to buy more tickets, new Interaction Managers will be instantiated to control the ticket buying process. However, depending on the processing and memory capability of the user's device it is also possible to keep the interaction managers, e.g. at least for some time, in the user's device.

According to one embodiment the user interface that is delivered through the service description can be used in place of the object. The idea behind this embodiment is the following. Objects like the poster displayed in Fig. 1 can be seen as a set of menus that allow the user to select one movie out of four, one show time out of five and so on. When the user initiates the interaction with the object and loads the interface the same options offered by the object are offered by the User Interface as well. For that purpose the corresponding data (which is stored on the physical tags) may also be stored somewhere on a server and may be downloaded when the Web service description and the user interface description is downloaded. As a consequence the mobile phone user has the choice to either continue the interaction with the physical object (by swiping his phone over the corresponding tag, e.g. to select a movie theatre), or to leave the object and continue the interaction to the screen of the phone (e.g. by selecting the corresponding radio button). This feature may be very useful in case the user needs to interrupt the interaction with the object before it is concluded, e.g. due to connectivity loss or for other reasons.

Technically, this can be achieved exploiting two aspects:
a. The User Interface should provide the user all the choices provided through the physical object;
b. The User Interface should provide all hidden data that would be transferred by the object without any awareness of the user.

The first requirement is needed to guarantee that the user interface faithfully represents the object from which it was acquired. The second requirement is needed to guarantee that that the service client has all the information that is required to interact with the service.

This means that in effect there are two interfaces to the same object: one physical interface through the tags, the other virtual through the mobile's screen. The virtual one is generated together with the Web service client when the interaction manager is instantiated and the corresponding data needed for it may be stored on some server and downloaded when the interface is generated.

The system described before associates services to the tags that are contained in the object, not to the object itself. As a consequence, an object can contain tags that refer to very different services. For example, the poster in Fig. 1 is mainly about advertising movies and selling movie tickets, but it also offers to purchase public transport tickets. The movie tickets will be purchased using a service offered by the theatre, the transport tickets are offered by a service provided by the local public transport company.

No additional machinery is needed to support the interaction with multiple services. The user may start purchasing the movie ticket, an Interaction Manager for the movie ticket service is provided; before concluding the interaction with this service the user may decide to buy the transport ticket, upon touching the transport tag another Interaction Manager is provided, this time for the transport service. The two Interaction Managers are used independently until both of them complete their execution.

In the foregoing description the tag (preferably each and any tag) contains a reference to the storage location of the Web service description describing the corresponding Web service. According to one embodiment, however, the tag itself may contain the full Web service description if there is enough space on the tag. In such a case the tag reading operation may directly read the complete Web service description without referring to a remote storage location identified by a reference such as a URL.

In one embodiment in such a case the tag preferably also contains an identifier identifying the Web service description which enables the interaction manager registry to index the already existing interaction managers based on this ID, and if a tag is read the interaction manager registry can check whether the corresponding interaction manager exists already or whether it at first has to be generated (as described before).

A feature that is supported by one embodiment is the independence of the actions of the user from the protocol of the service. This will now be described in somewhat more detail.

According to one embodiment the interaction manager contains a value store for storing data which has been read from tags, as shown in Fig. 2. This value store may be generated or maintained when generating the interaction manager, e.g. by reserving and maintaining a certain storage area for storing data read from the tags.

Any data read from a tag may then be stored in such a value store, preferably together with the reference to the storage location of said Web service description or the identifier of said Web service description. This makes it possible to store and to later correctly identify this data even if the actual service for which this data is to be interpreted as a parameter (e.g. the movie theater the user wants to visit in case of the service "By movie ticket) has not been called or started. The data identifying the movie theater is then stored in the value store, and later if the user starts the actual Web service for buying the movie tickets (e.g. by swiping the tag reader over the corresponding action tag) the value store is looked up whether it contains already parameters for the just called service, like in the present example the movie theater already selected by the user.

The user may - contrary to the usual way of operation - therefore input the parameter values before the application which actually should use them has even be started. This becomes possible by the maintenance of the value store for these data and by storing therein the data together with the identifier of the Web service description or the reference to the storage location of the Web service description of the service for which these data should act as parameters. Once the Web service is running, it may then look-up the value store for checking whether the relevant parameters are already stored therein and may be used.

In this manner the input of the parameters becomes order independent, even to some extent time and location independent. A user may e.g. before noon select the movie theater by selecting the tag T2 in Fig. 1 of a poster at the central station, and he then may have to leave before completiung the other input, and at another station where the same poster is placed he may complete his input by selecting the other relevant parameters (number of tickets, etc.) and may start the Web service by selecting the corresponding action tag.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed and have suitable interfaces and peripherals (such as a tag reader) so as to act in accordance with the methods explained in connection with embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

## Claims

1. A method for executing an interaction between a mobile device of a user and a Web service corresponding to a tag attached to a physical object, said method comprising:
reading the tag information contained in a tag attached to a physical object by a tag reading module of said mobile device, whereas said tag information contains a description of a Web service or a link to a storage location where a description of said Web service is stored;
accessing said storage location by said mobile device to download said description of said Web service;
generating an interaction manager which comprises a service client based on said downloaded Web service description to enable said user's device to interact with the Web service corresponding to said tag.

2. The method of claim 1, further comprising:
maintaining an interaction manager registry in which interaction managers are indexed with their corresponding links to the storage locations where the description of the Web service corresponding to an interaction manager is stored;
if a tag is read, checking in the interaction manager registry whether for the storage location of the Web service description as identified by the link in the tag information there exists already a corresponding interaction manager in the mobile device;
if the interaction manager exists already, using it for performing the interaction with the Web service;
if the interaction manager doesn't exist yet, accessing said storage location to download said Web service description and to instantiate said interaction manager.

3. The method of claim 1 or 2, wherein
said description of said Web service stored on said tag has an associated identifier, and
in said interaction manager registry interaction managers are indexed using said identifier identifying said Web service description to enable the determination whether a corresponding interaction manager exists already or not.

4. The method of one of claims 1 to 3, wherein said Web service description further comprises a description of a user interface, said method further comprising:
generating a user interface based on said Web service description which specifies what information is provided to the user and what information is asked.

5. The method of one of the preceding claims, wherein said Web service description comprises:
a description of the protocol of the Web service which specifies in which order to execute the operations of the Web service.

6. The method of one of the preceding claims, wherein
a tag may contain a value to be used by said Web service as an input, said tag further comprising an ID of said value and/or a reference to the storage location of said Web service description or the indentifier of said Web service description, and wherein said Web service description comprises:
an association between the IDs of the tags containing a value to be used as an input by said Web service and the corresponding inputs expected by the Web service, and whereas said method further comprises:
generating a value store in said mobile device to store said IDs together with the corresponding values from said tags to enable said values to be forwarded to said Web service.

7. The method of one of the preceding claims, wherein
a tag may contain an action identifier identifying an action to be performed by said Web service, said identifier comprising:
a reference to the storage location of said Web service description or the indentifier of said Web service description, and
an identifier identifying said action within said Web service description, whereas
reading said by said mobile device triggers the execution of said action identified by said action identifier.

8. The method of one of the preceding claims, further comprising:
maintaining a value store in which the data read from said tags can be stored, whereas each tag comprises a reference to the storage location of said Web service description or the indentifier of said Web service description, said method further comprising:
storing data contained on a tag in said value store together with the reference to the storage location of said Web service description or the indentifier of said Web service description.

9. The method of one of the preceding claims, comprising:
the user interface provides the user with the possibility to input the data which can also be read from a tagged object to thereby enable the user to input the data from the tagged object or through the user interface.

10. An apparatus for executing an interaction between a mobile device of a user and a Web service corresponding to a tag attached to a physical object, said apparatus comprising:
a reading module for reading the tag information contained in a tag attached to a physical object by a tag reading module of said mobile device, whereas said tag information contains a description of a Web service or a link to a storage location where a description of said Web service is stored;
an access module for accessing said storage location by said mobile device to download said description of said Web service;
a generation module for generating an interaction manager which comprises a service client based on said downloaded Web service description to enable said user's device to interact with the Web service corresponding to said tag.

11. The apparatus of claim 10, further comprising:
a module for maintaining an interaction manager registry in which interaction managers are indexed with their corresponding links to the storage locations where the description of the Web service corresponding to an interaction manager is stored;
a module for if a tag is read, checking in the interaction manager registry whether for the storage location of the Web service description as identified by the link in the tag information there exists already a corresponding interaction manager in the mobile device;
for -if the interaction manager exists already - using it for performing the interaction with the Web service;
and for - if the interaction manager doesn't exist yet - accessing said storage location to download said Web service description and to instantiate said interaction manager.

12. The apparatus of claim 10 or 11, wherein
said description of said Web service stored on said tag has an associated identifier, and
in said interaction manager registry interaction managers are indexed using said identifier identifying said Web service description to enable the determination whether a corresponding interaction manager exists already or not.

13. The apparatus of one of claims 10 to 12, wherein said Web service description further comprises a description of a user interface, said apparatus further comprising:
a module for generating a user interface based on said Web service description which specifies what information is provided to the user and what information is asked.

14. The apparatus of one of claims 10 to 13, wherein said Web service description comprises:
a description of the protocol of the Web service which specifies in which order to execute the operations of the Web service.

15. The apparatus of one of claims 10 to 14, wherein
a tag may contain a value to be used by said Web service as an input, said tag further comprising an ID of said value and/or a reference to the storage location of said Web service description or the indentifier of said Web service description, and wherein said Web service description comprises:
an association between the IDs of the tags containing a value to be used as an input by said Web service and the corresponding inputs expected by the Web service, and whereas said method further comprises:
generating a value store in said mobile device to store said IDs together with the corresponding values from said tags to enable said values to be forwarded to said Web service.

16. The apparatus of one of claims 10 to 15, wherein
a tag may contain an action identifier identifying an action to be performed by said Web service, said identifier comprising:
a reference to the storage location of said Web service description or the indentifier of said Web service description, and
an identifier identifying said action within said Web service description, whereas
reading said by said mobile device triggers the execution of said action identified by said action identifier.

17. The apparatus of one of claims 10 to 16, further comprising:
a module for maintaining a value store in which the data read from said tags can be stored, whereas each tag comprises a reference to the storage location of said Web service description or the indentifier of said Web service description, said method further comprising:
a module for storing data contained on a tag in said value store together with the reference to the storage location of said Web service description or the indentifier of said Web service description.

18. The apparatus of one of claims 10 to 17, wherein:
the user interface provides the user with the possibility to input the data which can also be read from a tagged object to thereby enable the user to input the data from the tagged object or through the user interface.

19. A tagged physical object for interacting with an apparatus and a Web service according to one of claims 10 to 18, whereas the information contained in said tag comprises:
a link to a storage location where a description of said Web service is stored.

20. A computer program comprising program code which when being executed on a computer causes said computer to carry out a method according to one of claims 1 to 9.
